# EUROPEAN PATENT APPLICATION

(11) **EP 4 835 720 A2**
(43) Date of publication of application: **04.11.2026**
(21) Application number: 26206917.2
(22) Date of filing: 23.09.2026
(51) Int. Cl.: G06F 21/78, G06F 12/109

(54) **MEMORY ACCESS CONTROL METHOD, APPARATUS, SYSTEM AND ELECTRONIC DEVICE**

(30) Priority: 24.08.2026 SG 10202602968
(71) Applicant: XG TECH PTE. LTD., Singapore 179098 (SG)
(72) Inventor: LIN, Wei, 179098 Singapore (SG); YE, Chunchao, 179098 Singapore (SG)
(74) Representative: Patentanwälte Magenbauer & Kollegen Partnerschaft mbB

(57) **Abstract**

The present disclosure relates to the technical field of computer technology, and provides a memory access control method and apparatus, a system, and an electronic device. The method includes: generating, based on a service requirement, a memory access request of a master device, wherein the memory access request comprises a target stream identifier, the target stream identifier being one of at least one stream identifier pre-configured for the master device; determining, based on the service requirement and the target stream identifier, a pre-created target virtual device node receiving the memory access request, wherein a target virtual stream identifier pre-configured on the target virtual device node is the same as the target stream identifier; forwarding the memory access request to a system memory management unit via the target virtual device node; and processing the memory access request through the system memory management unit.

## Description

### TECHNICAL FIELD

The present disclosure relates to the technical field of computer technology, and in particular, to a memory access control method and apparatus, a system, and an electronic device.

### BACKGROUND

In a System on Chip (SoC), multiple operating systems such as Advanced Driver Assistance Systems (ADAS), In-Vehicle Infotainment (IVI), and a Cluster system need to share hardware master devices, such as a Video Processing Unit (VPU), an Audio Digital Signal Processor (ADSP), etc., to achieve efficient utilization of hardware resources.

At present, when multiple operating systems share a master device in a SoC, a configuration manner of a System Memory Management Unit (SMMU) results in low memory access efficiency and security risks.

### SUMMARY

To solve the above technical problem, the present disclosure provides a memory access control method and apparatus, a system, and an electronic device. By dynamically configuring a stream identifier of a master device based on a service requirement and creating a virtual device node matching the stream identifier as an intermediate forwarding node, the method not only enables a plurality of master devices to share a common page table to improve access efficiency, but also allows the same master device to use different stream identifiers across different operating systems to ensure secure memory isolation.

According to a first aspect of the present disclosure, provided is a memory access control method, including:
generating, based on a service requirement, a memory access request of a master device, wherein the memory access request includes a target stream identifier, the target stream identifier being one of at least one stream identifier pre-configured for the master device;
determining, based on the service requirement and the target stream identifier, a pre-created target virtual device node receiving the memory access request, wherein a target virtual stream identifier pre-configured on the target virtual device node is the same as the target stream identifier;
forwarding the memory access request to a system memory management unit via the target virtual device node; and
processing the memory access request through the system memory management unit.

According to a second aspect of the present disclosure, provided is a memory access control apparatus, including:
a request generation module, configured to generate, based on a service requirement, a memory access request of a master device, wherein the memory access request includes a target stream identifier, the target stream identifier being one of at least one stream identifier pre-configured for the master device;
a node determination module, configured to determine, based on the service requirement and the target stream identifier, a pre-created target virtual device node receiving the memory access request, wherein a target virtual stream identifier pre-configured on the target virtual device node is the same as the target stream identifier;
a request forwarding module, configured to forward the memory access request to a system memory management unit via the target virtual device node; and
a request processing module, configured to process the memory access request through the system memory management unit.

According to a third aspect of the present disclosure, provided is a chip system, including:
a master device configured with at least one stream identifier, and configured to generate a memory access request based on a service requirement and to send the memory access request to a target virtual device node based on the service requirement and a target stream identifier, wherein the memory access request includes the target stream identifier, the target stream identifier being one of at least one stream identifier pre-configured for the master device, and wherein a target virtual stream identifier pre-configured on the target virtual device node is the same as the target stream identifier;
a virtual device node configured with a virtual stream identifier and configured to receive the memory access request and forward the memory access request to a system memory management unit;
wherein the system memory management unit is configured to process the received memory access request.

According to a fourth aspect of the present disclosure, provided is a computer-readable storage medium, wherein the storage medium stores a computer program, and the computer program is configured to execute the memory access control method provided in the embodiment of the first aspect of the present disclosure.

According to a fifth aspect of the present disclosure, provided is an electronic device, including: a processor and a memory for storing processor-executable instructions, wherein the processor is configured to read the executable instructions from the memory and execute the executable instructions to implement the memory access control method provided in the first aspect.

In the technical solution of the embodiment of the present disclosure, first, a memory access request of at least one master device is generated based on a service requirement, the memory access request including a target stream identifier selected from pre-configured stream identifiers. Second, based on the service requirement and the target stream identifier, a pre-created target virtual device node is determined, a target virtual stream identifier pre-configured on the target virtual device node is consistent with the target stream identifier, and then the memory access request is forwarded to a system memory management unit via the target virtual device node. Finally, the memory access request is processed through the system memory management unit to achieve memory access by the master device. Through this solution, a plurality of master devices can share a page table through the same stream identifier to improve access efficiency, and enables the same master device to associate independent page tables through different stream identifiers in different operating systems or service phases to achieve security isolation.

### BRIEF DESCRIPTION OF DRAWINGS

FIG. 1 is a structural block diagram of a chip system according to an exemplary embodiment of the present disclosure;
FIG. 2 is a schematic flowchart of a memory access control method according to an exemplary embodiment of the present disclosure;
FIG. 3 is a schematic flowchart of step S200 according to an exemplary embodiment of the present disclosure;
FIG. 4 is a schematic flowchart of step S100 according to an exemplary embodiment of the present disclosure;
FIG. 5 is a schematic flowchart of step S100 according to another exemplary embodiment of the present disclosure;
FIG. 6 is a schematic flowchart of step S400 according to an exemplary embodiment of the present disclosure;
FIG. 7 is a schematic structural diagram of a memory access control apparatus according to an exemplary embodiment of the present disclosure;
FIG. 8 is a schematic structural diagram of a memory access control apparatus according to another exemplary embodiment of the present disclosure; and
FIG. 9 is a structure diagram of an electronic device according to an exemplary embodiment of the present disclosure.

### DETAILED DESCRIPTION OF THE EMBODIMENTS

To explain the present disclosure, exemplary embodiments of the present disclosure will be described in detail below with reference to the accompanying drawings. It is obvious that the described embodiments are only a part, not all of the embodiments of the present disclosure, and it should be understood that the present disclosure is not limited by the exemplary embodiments.

It should be noted that: unless specifically stated otherwise, the relative arrangement, numerical expressions and numerical values of components and steps set forth in these embodiments do not limit the scope of the present disclosure.

Hereinafter, the terms "first", "second", etc. are used for descriptive purposes only, and shall not be interpreted as indicating or implying the relative importance, or implicitly specifying the number of the technical features thus indicated. Thus, the features defined with "first", "second", etc. may explicitly or implicitly include one or more of such features. In the description of the present disclosure, unless otherwise specified, "a plurality of" means two or more.

In the embodiments of the present disclosure, words such as "exemplary", "for instance" or "for example" are used to mean serving as an example, instance or illustration. Any embodiment or design described as "exemplary", "for instance" or "for example" in the embodiments of the present disclosure should not be interpreted as being more preferred or more advantageous than other embodiments or designs. Specifically, the use of words such as "exemplary", "for instance" or "for example" is intended to present related concepts in a concrete manner.

### Application Overview

In the technical field of system-on-chip, when multiple operating systems share hardware master devices, it is necessary to achieve memory access control and isolation through a system memory management unit. At present, there are mainly two approaches for the stream identifier configuration of the system memory management unit: a fixed stream identifier is assigned to each master device and an independent page table is bound thereto, but this approach results in an inability to share page tables and low access efficiency; or in a virtualization scenario, the same master device is forced to use the same stream identifier and page table in different systems, but this approach results in a lack of security isolation for memory access and risks of data overrun. It is difficult for both the approaches to balance memory sharing efficiency and access security, thereby limiting the resource utilization and reliability of the system.

To solve the above technical problem of being difficult to balance memory sharing and security isolation, the embodiments of the present disclosure provide a new solution. Specifically, the embodiments of the present disclosure provide a memory access control method and apparatus, a system, and an electronic device. The method focuses on that based on a service requirement, a memory access request of a master device including a target stream identifier is generated, the target stream identifier is one of at least one stream identifier pre-configured for the master device; based on the service requirement and the target stream identifier, a pre-created target virtual device node receiving the memory access request is determined, a target virtual stream identifier pre-configured on the target virtual device node is the same as the target stream identifier; the memory access request is forwarded to a system memory management unit via the target virtual device node; and then the memory access request is processed through the system memory management unit, so that a plurality of master devices can share a page table through the same stream identifier to improve access efficiency, and the same master device can associate independent page tables through different stream identifiers in different operating systems or service phases to achieve security isolation. This solution does not need to rely on specific hardware modifications, significantly improves the flexibility and security of system memory management, and effectively meets the complex memory access demands of multiple operating systems and a plurality of master devices in a cockpit-driving integration scenario.

### Exemplary System

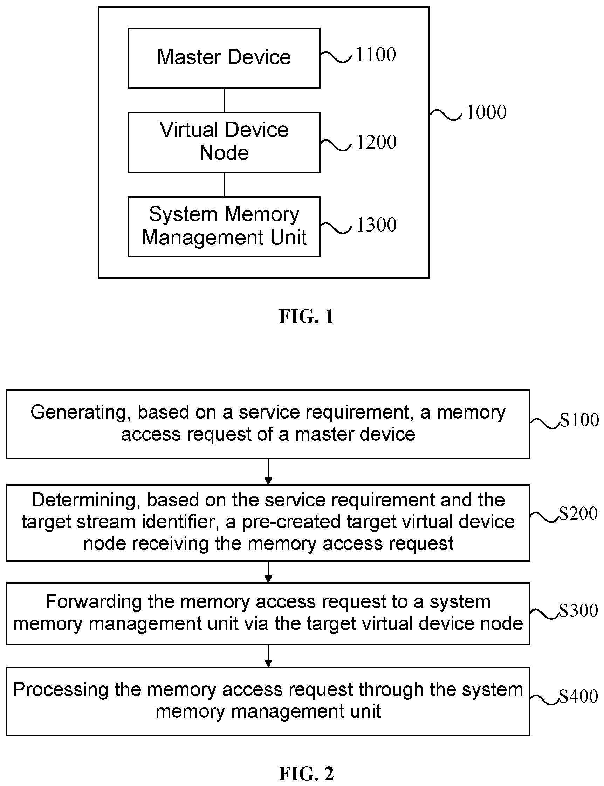

FIG. 1 is a structural block diagram of a chip system according to an exemplary embodiment of the present disclosure.

As shown in FIG. 1, in an exemplary embodiment, a chip system 1000 may include a master device 1100, a virtual device node 1200, and a system memory management unit 1300. Exemplarily, the virtual device node may be a DMA-BUF Agent, implemented using a Direct Memory Access Buffer (DMA-BUF), and configured to transfer a memory access request between the master device and the system memory management unit, and match and forward the request according to a pre-configured virtual stream identifier.

The chip system 1000 is applicable to an application scenario wherein multiple operating systems run on the same chip. For example, in a system-on-chip, multiple operating systems such as an Advanced Driver Assistance System, an In-Vehicle Infotainment system and a Cluster system run simultaneously, and the multiple operating systems share master devices such as a Video Processing Unit, an Audio Digital Signal Processor, etc. The ADSP is a type of Digital Signal Processor (DSP) configured to process audio digital signals.

In one implementation, the chip system 1000 includes at least one master device 1100. The master device 1100 is configured with at least one stream identifier (Streamid or Stream ID). The master device 1100 is configured to generate, based on a service requirement, a memory access request, wherein the memory access request includes a target stream identifier, the target stream identifier being one of the at least one stream identifier pre-configured for the master device 1100.

In one implementation, an association relationship between at least one master device 1100 and a memory of at least one operating system is pre-set for the service requirement. For example, based on a service requirement 1, a plurality of master devices 1100 access a memory of one operating system, according to a service requirement 2, one master device 1100 accesses memories of multiple operating systems in a time-division manner, and according to a service requirement 3, one master device accesses a memory of one operating system, etc.

In one implementation, the master device 1100 sends the memory access request to a target virtual device node based on the service requirement and the target stream identifier. A target virtual stream identifier pre-configured on the target virtual device node is the same as the target stream identifier.

In another implementation, the chip system 1000 may further include a data transmission module configured to receive the memory access request sent by the master device 1100, and send the memory access request to the target virtual device node based on the service requirement and the target stream identifier.

In one implementation, the chip system further includes at least one virtual device node 1200. The virtual device node 1200 is configured with a virtual stream identifier and configured to receive the memory access request and forward the memory access request to the system memory management unit 1300.

The system memory management unit 1300 is configured to process the received memory access request to achieve access to a memory.

In the chip system of the embodiment of the present disclosure, first, the master device generates a memory access request based on a service requirement, and sends the memory access request to a target virtual device node based on the service requirement and a target stream identifier, wherein the memory access request includes the target stream identifier, the target stream identifier being one of at least one stream identifier pre-configured for the master device, and a target virtual stream identifier pre-configured on the target virtual device node is the same as the target stream identifier. Then, the target virtual device node receives the memory access request and forwards the memory access request to the system memory management unit, and further the system memory management unit processes the received memory access request to achieve memory access by the master device. This solution solves the problems of low access efficiency and insufficient security isolation when multiple operating systems share hardware resources, so that a plurality of master devices can share a page table through the same stream identifier to improve access efficiency, and the same master device can associate independent page tables through different stream identifiers in different operating systems or service phases to achieve security isolation.

### Exemplary Method

FIG. 2 is a schematic flowchart of a memory access control method according to an exemplary embodiment of the present disclosure. The embodiment can be implemented by an electronic device. As shown in FIG. 2, the method includes the following steps:
S100: Generating, based on a service requirement, a memory access request of a master device.

The service requirement includes a specific requirement for memory access of a currently running task or application, such as a plurality of master devices needing to access a memory of the same operating system, or a single master device needing to access memories of multiple operating systems in a time-division manner, etc. Exemplarily, the plurality of master devices may be hardware entities capable of initiating memory access requests, including independent physical devices (such as a Video Processing Unit), and the plurality of master devices may also be a plurality of processing units (such as a plurality of processing cores of an Audio Digital Signal Processor) within the same physical device that can independently initiate memory access requests.

A master device refers to a hardware module or processor core capable of initiating a memory access request. For example, in a cockpit-driving integrated SoC system, the master device is typically shared by multiple operating systems, and the master device may be a Video Processing Unit (VPU), an Audio Digital Signal Processor, a camera device, etc.

A memory access request is an instruction initiated by a master device to an operating system to read/write data. The memory access request includes a target stream identifier, wherein the target stream identifier is one of at least one stream identifier pre-configured for the master device. A stream identifier is an identifier used by a system memory management unit to distinguish different transaction streams. The system memory management unit searches for a page table corresponding to the stream identifier to complete translation from a virtual address to a physical address.

Exemplarily, each master device may be pre-configured with one or more stream identifiers. When the master device needs to access a memory, according to a current service requirement, one of the pre-configured at least one stream identifier is selected as a target stream identifier for the current access.

Through the implementation of this step, service logic is converted into a concrete memory access request. Specifically, based on a service requirement, a target stream identifier is selected from at least one stream identifier pre-configured for the master device, and a memory access request that includes the target stream identifier is generated, thereby achieving dynamic and scenario-based configuration of the stream identifier. Implementation of this solution can be varied among a plurality of pre-configured stream identifiers according to real-time service requirements, so as to switch among different memory access modes.

S200: Determining, based on the service requirement and the target stream identifier, a pre-created target virtual device node receiving the memory access request.

A target virtual stream identifier pre-configured on the target virtual device node is the same as the target stream identifier. A virtual device node may refer to a memory access proxy node pre-created at a software level, serving as an intermediate channel between the master device and the system memory management unit. Each virtual device node is pre-configured with a virtual stream identifier, and may correspond one-to-one to a target stream identifier of a certain service scenario. The virtual stream identifier refers to an identifier configured on the virtual device node. Exemplarily, the virtual device node may be deployed on an operating system. For example, if a memory managed by operating system 1 needs to be accessed, the virtual device node may be deployed on the operating system 1. For another example, if the master device belongs to an operating system 2, the virtual device node may be deployed on the operating system 2.

Through the implementation of this step, by means of the dual configuration of the service requirement and the target stream identifier, a pre-created virtual device node corresponding to the service scenario is determined, and a binding relationship between the master device and the virtual device node is established, so that the memory access request can be forwarded based on the service requirement.

Exemplarily, through information such as an operating system name, access permission, etc. based on the service requirement and the target stream identifier, the target virtual device node is determined from a plurality of virtual device nodes. For example, the service requirement indicates a master device 1 accessing a memory of an operating system A. An independent virtual device node a may be created for the operating system A, and a virtual stream identifier 11 may be configured for the virtual device node a. Of course, the master device 1 is pre-set with the stream identifier 11. Further, during the current memory access, the master device 1 accesses the memory of the operating system A. Based on the service requirement, a memory access request of the master device 1 is generated, including the target stream identifier 11. According to the operating system name based on the service requirement and the target stream identifier 11, the corresponding operating system A is found, and the target virtual device node a pre-created for the operating system A is determined. Exemplarily, the virtual device node a may be created in the operating system A.

S300: Forwarding the memory access request to a system memory management unit via the target virtual device node.

The system memory management unit is a key component for multiple operating systems to share memory resources, and distinguishes different transaction streams through stream identifiers to ensure access isolation and efficiency. The target virtual device node serves as a request relay station, and forwards the memory access request carrying the target stream identifier to the system memory management unit.

Through the implementation of this step, through the forwarding function of the virtual device node, the memory access request with the target stream identifier is correctly delivered to the system memory management unit for processing. This implementation ensures the continuity and consistency of the entire dynamic configuration process.

S400: Processing the memory access request through the system memory management unit.

The processing of the memory access request includes that the system memory management unit completes a memory access control operation matching the current service requirement based on the target stream identifier carried in the memory access request.

Through the implementation of this step, through the system memory management unit, a unique page table is determined based on the target stream identifier in the memory access request, and then subsequent memory address determination is performed to achieve memory access by the master device.

The technical solution of the embodiments of the present disclosure is applicable to a scenario wherein multiple operating systems share hardware resources. First, a memory access request of at least one master device is generated based on a service requirement, the memory access request including a target stream identifier selected from pre-configured stream identifiers. Second, based on the service requirement and the target stream identifier, a pre-created target virtual device node is determined, a target virtual stream identifier pre-configured on the target virtual device node is consistent with the target stream identifier, and then the memory access request is forwarded to a system memory management unit via the target virtual device node. Finally, the memory access request is processed through the system memory management unit to achieve memory access by the master device. Through this solution, a plurality of master devices can share a page table through the same stream identifier to improve access efficiency, and enables the same master device to associate independent page tables through different stream identifiers in different operating systems or service phases to achieve security isolation.

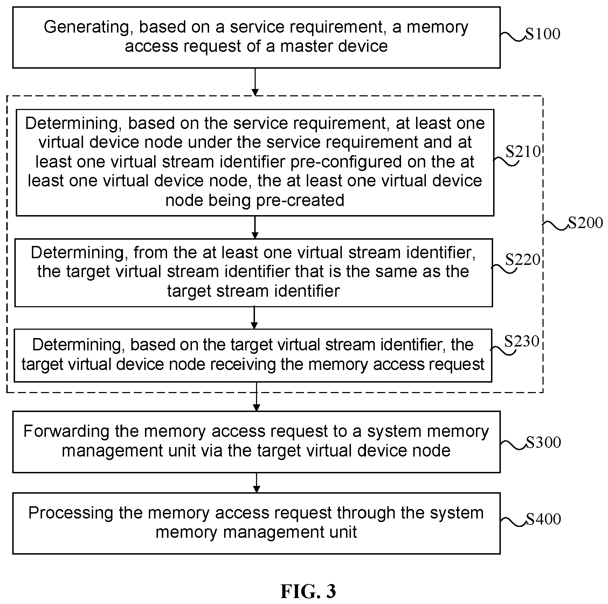

FIG. 3 is a schematic flowchart of step S200 according to an exemplary embodiment of the present disclosure.

As shown in FIG. 3, in one implementation, S200 of determining, based on the service requirement and the target stream identifier, a pre-created target virtual device node receiving the memory access request may include:
S210: Determining, based on the service requirement, at least one virtual device node under the service requirement and at least one virtual stream identifier pre-configured on the at least one virtual device node, the at least one virtual device node being pre-created.

Exemplarily, at least one virtual device node is configured for the service requirement, and each virtual device node is pre-configured with a virtual stream identifier. For example, a master device 1 is required to access memories of an operating system A, an operating system B, and an operating system C in a time-division manner based on a service requirement Q. The service requirement Q includes a virtual device node a, a virtual device node b, and a virtual device node c respectively created by the three operating systems, and each virtual device node is configured with a virtual stream identifier 11, 22, and 33.

Through the implementation of this step, based on the service requirement, the virtual device node required in the service requirement and the virtual stream identifier pre-configured on the virtual device node can be determined, so as to prepare for subsequently determining the target stream identifier.

S220: Determining, from the at least one virtual stream identifier, the target virtual stream identifier that is the same as the target stream identifier.

Continuing with the example in step S210, the service requirement includes virtual stream identifiers 11, 22, and 33. In the current memory access, based on the service requirement, the generated memory access request includes the target stream identifier 11. The target virtual stream identifier 11 that is the same as the target stream identifier 11 is determined, and then the target virtual device node a can be determined. The memory access request is forwarded to the system memory management unit via the target virtual device node a, and memory access to the operating system A can be achieved through the system memory management unit.

Of course, after the current memory access ends, based on the service requirement, a memory access request that includes the target stream identifier 22 can be generated, the target virtual stream identifier 22 that is the same as the target stream identifier 22 is determined, then the target virtual device node b is determined, the memory access request is forwarded to the system memory management unit via the target virtual device node b, and memory access to the operating system B is achieved through the system memory management unit. Similarly, after this memory access ends, based on the service requirement, a memory access request that includes the target stream identifier 33 and subsequent processing can be generated to achieve memory access to the operating system C.

Through the implementation of this step, the target virtual stream identifier that is the same as the target stream identifier is determined from the at least one virtual stream identifier, thereby determining the target virtual stream identifier for the current round of memory access.

S230: Determining, based on the target virtual stream identifier, the target virtual device node receiving the memory access request.

Through the implementation of this step, according to the target virtual stream identifier that is the same as the target stream identifier, the target virtual device node receiving the memory access request is determined, thereby determining the target virtual device node.

In the technical solution of the embodiment of the present disclosure, first, through an initial screening of the service requirement, i.e., based on the service requirement, at least one virtual device node under the service requirement and at least one virtual stream identifier pre-configured on the at least one virtual device node are determined, the at least one virtual device node being pre-created. Then, based on matching of stream identifiers, i.e., a target virtual stream identifier that is the same as the target stream identifier is determined from the at least one virtual stream identifier, and then the target virtual device node receiving the memory access request is determined based on the target virtual stream identifier. By configuring different virtual device nodes and virtual stream identifiers for different service requirements, this solution enables a plurality of master devices to share one virtual device node by configuring the same target stream identifier, thereby enabling a plurality of master devices to share one page table and improving access efficiency. In addition, this solution also enables the same master device to match different virtual device nodes by switching target stream identifiers under different service requirements, so that when the master device is reused in a time-division manner among different operating systems or different security domains, different stream identifiers and independent page tables are used, thereby ensuring security isolation of memory access.

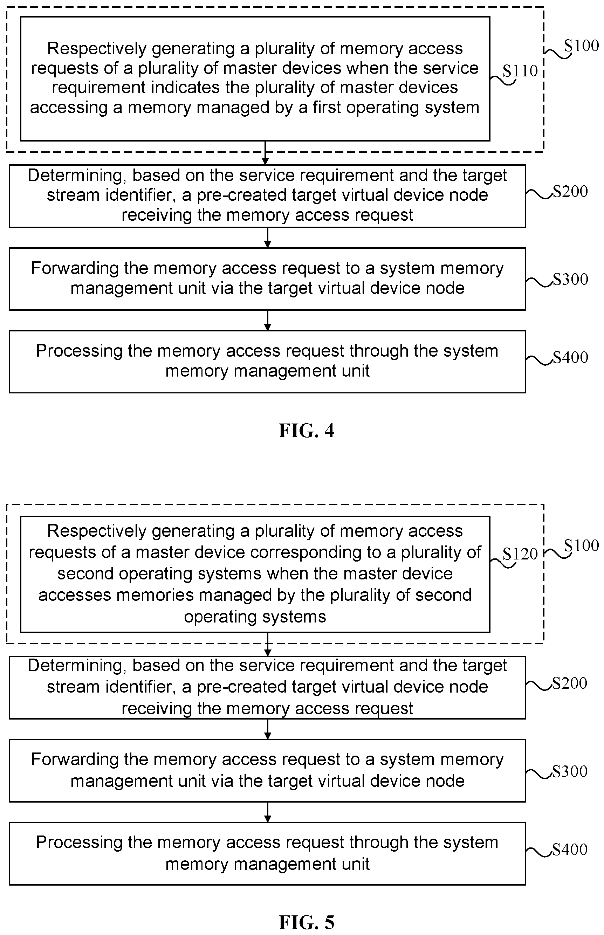

FIG. 4 is a schematic flowchart of step S100 according to an exemplary embodiment of the present disclosure.

As shown in FIG. 4, in one implementation, step S100: Generating, based on a service requirement, a memory access request of a master device may include:
S110: Respectively generating a plurality of memory access requests of a plurality of master devices when the service requirement indicates the plurality of master devices accessing a memory managed by a first operating system.

Target stream identifiers in the plurality of memory access requests are the same.

The first operating system may refer to a target operating system that the plurality of master devices need to access jointly. For example, in an intelligent cockpit scenario, the first operating system may be an In-Vehicle Infotainment system or a Cluster system.

In the embodiments of the present disclosure, the memory managed through the first operating system refers to an independent physical memory area owned and managed by the operating system.

In the service scenario of the embodiments of the present disclosure, when a plurality of different master devices need to access jointly a memory area managed by the same operating system based on a service requirement, respective memory access requests of the respective master devices are generated. The target stream identifiers carried in these memory access requests are the same. Further, in this service scenario, these master devices initiate memory access using the same stream identifier.

In an exemplary embodiment, an Audio Digital Signal Processor includes a plurality of processing cores, such as core0, core1, and core2. The current service requirement indicates the plurality of processing cores accessing a memory in an In-Vehicle Infotainment system.

Exemplarily, the plurality of processing cores of the Audio Digital Signal Processor share a Translation Buffer Unit (TBU) hardware interface in the system memory management unit.

A virtual device node is deployed on the In-Vehicle Infotainment system, and a virtual stream identifier X is configured for the virtual device node. Meanwhile, a first-stage page table translation (e.g., Stage1) corresponding to the system memory management unit is enabled.

Each processing core generates a memory access request based on the service requirement, wherein the memory access request includes a target stream identifier, the target stream identifier being configured as the same value X. Based on the service requirement to access the memory managed by the In-Vehicle Infotainment system and the target stream identifier X, the target virtual device node receiving the memory access request is identified as the virtual device node with the virtual stream identifier X deployed on the In-Vehicle Infotainment system. The virtual device node forwards the memory access request to the system memory management unit. The system memory management unit determines a corresponding page table according to the target stream identifier X, and translates a virtual address in the memory access request into a correct physical address, thereby achieving access to the memory managed by the In-Vehicle Infotainment system.

In the above manner, the plurality of processing cores of the Audio Digital Signal Processor share one page table, thereby achieving efficient shared access of the plurality of processing cores to the memory of the same operating system.

In some embodiments, before respectively generating memory access requests of a plurality of master devices when the service requirement indicates the plurality of master devices accessing a memory managed by a first operating system, the method further includes: creating a virtual device node through the first operating system; and configuring, for the virtual device node, a virtual stream identifier that is the same as the target stream identifier.

In the embodiment of the present disclosure, first, a virtual device node is created through the first operating system, and then a virtual stream identifier that is the same as the target stream identifier is configured for the virtual device node. In a service scenario wherein a plurality of master devices access the same operating system, by having the target operating system pre-create a virtual device node and configure it with the same virtual stream identifier as that of the master devices, a transmission channel is constructed for subsequent memory access sharing by a plurality of master devices. When the plurality of master devices initiate memory access requests with the same target stream identifier then, the requests can be accurately sent to the virtual device node. In multiple operating system environments, according to this solution, a shared access path from a plurality of master devices to the target operating system is generated from software pre-configuration.

FIG. 5 is a schematic flowchart of step S100 according to another exemplary embodiment of the present disclosure.

As shown in FIG. 5, in one implementation, step S100: Generating, based on a service requirement, a memory access request of a master device may include:
S120: Respectively generating a plurality of memory access requests of a master device corresponding to a plurality of second operating systems when the service requirement indicates the master device accessing memories managed by the plurality of second operating systems.

Target stream identifiers in the plurality of memory access requests are different from each other.

Exemplarily, the stream identifier used by the master device when accessing the operating system A is X1, the stream identifier used when accessing the operating system B is Y1, and the stream identifier used when accessing the operating system C is Z1.

In the embodiment of the present disclosure, when the same master device needs to respectively access memory areas managed by multiple operating systems based on a service requirement, the master device respectively generates a corresponding memory access request for each operating system to be accessed. These memory access requests for different operating systems each carry a different target stream identifier. Through the implementation of the embodiment of the present disclosure, different stream identifiers are assigned to the same master device for accessing memories managed by different operating systems, so that the master device can initiate memory access requests at different times or in different service scenarios using different stream identifiers. This solution enables memory accesses of the same master device to multiple operating systems to be distinguished at the stream identifier level. Subsequently, through the system memory management unit, different and mutually isolated page tables are respectively determined according to the stream identifiers, thereby avoiding cross-access or leakage of memory data among different operating systems.

In some embodiments, the respectively generating a plurality of memory access requests of a master device corresponding to a plurality of second operating systems when the service requirement indicates the master device accessing memories managed by the plurality of second operating systems includes: switching, based on the service requirement at different times, a target stream identifier of the master device to a target stream identifier corresponding to a second operating system currently to be accessed when the service requirement indicates the master device accessing memories managed by the plurality of second operating systems; and generating, whenever generating the memory access request, the memory access request based on the target stream identifier of the master device at a current time.

Different times may refer to a chronological sequence, and the master device accesses multiple operating systems in a time-division manner.

Exemplarily, when the service requirement indicates the same master device needs to access multiple operating systems in a time-division manner, the master device dynamically adjusts its own stream identifier register at different times to a value corresponding to the target operating system that needs to be accessed at the current time. For example, when the operating system A needs to be accessed, the master device sets the target stream identifier to X1; when the operating system B needs to be accessed, the master device switches the target stream identifier to Y1.

In an exemplary embodiment, the master device is a camera device, and the current service requirement indicates the camera device pushes captured and processed image data to a Cluster system and an In-Vehicle Infotainment system respectively. Two virtual device nodes are deployed on an Advanced Driver Assistance System to which the camera device belongs, and are respectively configured with a virtual stream identifier X and a virtual stream identifier Y. The virtual stream identifier X corresponds to the Cluster system, and the virtual stream identifier Y corresponds to the In-Vehicle Infotainment system.

At a first moment (T0) of service operation, data needs to be shared with the Cluster system. At this time, the camera device configures its own stream identifier register as a target stream identifier X, and generates a memory access request that includes the target stream identifier X based on the service requirement. Based on the service requirement (needing to access the memory managed by the Cluster system) and the target stream identifier X, the target virtual device node receiving the memory access request is identified as the virtual device node configured with the virtual stream identifier X on the Advanced Driver Assistance System. The memory access request is forwarded to the system memory management unit through the virtual device node, and the system memory management unit determines a corresponding independent page table according to the target stream identifier X, completes address translation and then accesses the memory managed by the Cluster system.

At a second moment (T1) of service operation, data needs to be shared with the In-Vehicle Infotainment system. At this time, the camera device dynamically switches its own stream identifier register to a target stream identifier Y, and generates a memory access request that includes the target stream identifier Y based on the service requirement. Based on the service requirement (needing to access the In-Vehicle Infotainment system) and the target stream identifier Y, the target virtual device node receiving the memory access request is identified as the virtual device node configured with the virtual stream identifier Y on the Advanced Driver Assistance System. The request is forwarded to the system memory management unit through the virtual device node, and the system memory management unit determines a corresponding independent page table according to the target stream identifier Y, completes address translation and then accesses the memory managed by the In-Vehicle Infotainment system.

In the above manner, the same camera device is reused in a time-division manner at different times, and by dynamically configuring different target stream identifiers, different virtual device nodes and independent page tables are used, thereby achieving memory security isolation when pushing data to different operating systems.

In the embodiment of the present disclosure, when a single master device needs to access memories of a plurality of second operating systems in a time-division manner, at different service timing nodes, i.e., at different times, based on the second operating system currently to be accessed, the target stream identifier configured for the master device is switched to the target stream identifier corresponding to the operating system. Whenever generating a memory access request, the memory access request is generated based on the target stream identifier of the master device at the current time, so as to ensure that the target stream identifier carried in each memory access request is the same as the target stream identifier corresponding to the second operating system that the master device needs to access at the current time, so that the subsequent system memory management unit accurately determines the operating system to be accessed in this access according to the target stream identifier in the memory access request, and invokes a corresponding page table for address translation. The technical solution of the embodiment of the present disclosure achieves safe and flexible reuse of a master device among different operating systems, so that the same master device can safely serve multiple operating systems at different times. Each operating system uses an independent stream identifier and a page table, so that memory access paths are completely isolated, thereby avoiding data leakage or illegal access caused by sharing a stream identifier.

In some embodiments, before respectively generating a plurality of memory access requests of a master device corresponding to a plurality of second operating systems when the service requirement indicates the master device accessing memories managed by the plurality of second operating systems, the method further includes: respectively creating, on a third operating system, virtual device nodes respectively corresponding to the plurality of second operating systems when the master device belongs to the third operating system and an access type of memory access of the service requirement indicates writing data to a memory; and configuring, for each virtual device node, a virtual stream identifier, the virtual stream identifier being the same as a target stream identifier used when the master device accesses a second operating system corresponding to the virtual device node.

The third operating system refers to an operating system to which the master device currently belongs. For example, in a cockpit-driving integrated SoC system, a camera device may belong to an Advanced Driver Assistance System. The second operating system refers to a target operating system to whose managed memory data needs to be written, for example, a Cluster system and an In-Vehicle Infotainment system.

For example, if the camera device needs to write data to the Cluster system and the In-Vehicle Infotainment system respectively, two virtual device nodes are created on the Advanced Driver Assistance System, respectively corresponding to the Cluster system and the In-Vehicle Infotainment system.

In the technical solution of the embodiment of the present disclosure, applicable conditions are first clarified. First, the master device initiating the memory access belongs to a certain operating system (referred to as a third operating system). Second, the memory access type under the current service requirement indicates writing data to a memory managed by the second operating system, i.e., the master device needs to push data generated by it to a memory area managed by another operating system. When the above conditions are met, a creation operation is executed on the third operating system. Specifically, for each second operating system to which data needs to be written, a uniquely corresponding virtual device node is created in the third operating system, thereby establishing dedicated software-level transmission channels for the master device to write data to memories of different second operating systems, so that a single master device can respectively send data to corresponding second operating systems through a plurality of different virtual device nodes, thereby achieving distinction and isolation of output paths at the software level. After that, one virtual stream identifier is respectively configured for each virtual device node. When accessing the second operating system, the master device uses the stream identifier as a target stream identifier, and the virtual device node is also configured with the same virtual stream identifier. Since virtual device nodes corresponding to different second operating systems have different virtual stream identifiers (because the master device uses different target stream identifiers when accessing different second operating systems), memory accesses of the master device to a plurality of second operating systems can be performed without interfering with each other.

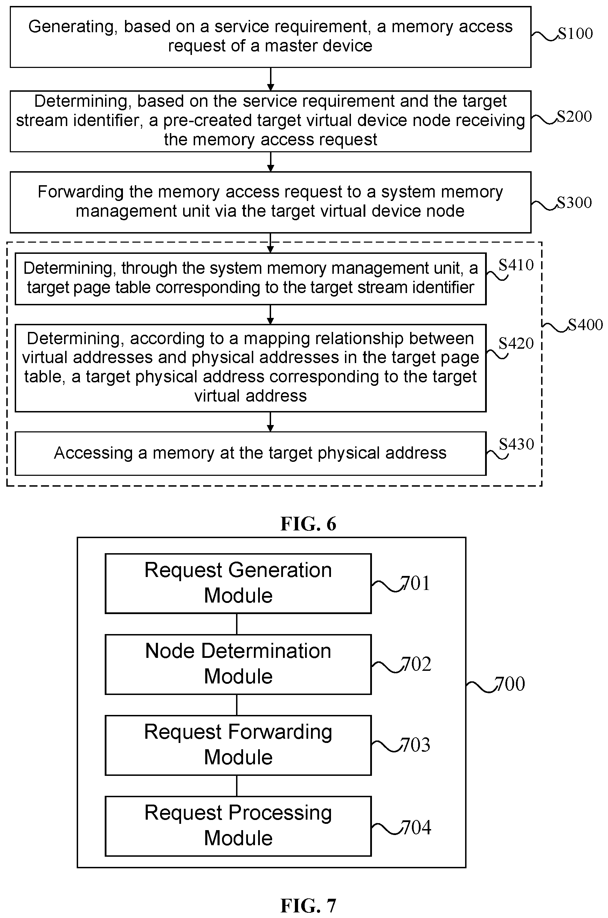

FIG. 6 is a schematic flowchart of step S400 according to an exemplary embodiment of the present disclosure.

As shown in FIG. 6, in one implementation, the memory access request further includes a target virtual address.

The target virtual address may refer to a memory address carried by the master device in the memory access request and expected to be accessed. The address is an address in a virtual address space and cannot be directly used to access a physical memory.

Step S400: Processing the memory access request through the system memory management unit includes steps S410 to S430, specifically as follows:
S410: Determining, through the system memory management unit, a target page table corresponding to the target stream identifier.

A page table is a data structure that records a mapping relationship between virtual addresses and physical addresses, and access permission information. In the system memory management unit, different stream identifiers may be associated with different page tables, thereby achieving address space isolation for accesses of different master devices.

Through the implementation of this step, after the system memory management unit receives the memory access request forwarded via the target virtual device node, it first parses the target stream identifier in the memory access request, and then, according to a pre-configured correspondence between stream identifiers and page table base addresses, determines a page table corresponding to the target stream identifier, and uses the page table as a target page table on which the current address translation is based.

S420: Determining, according to a mapping relationship between virtual addresses and physical addresses in the target page table, a target physical address corresponding to the target virtual address.

Exemplarily, the target page table records a plurality of groups of mapping entries, each entry mapping a range of virtual addresses to a range of physical addresses.

Through the implementation of this step, the target virtual address is used as an index, a lookup is performed in the target page table to determine the target physical address. This solution achieves translation from a virtual address to a physical address.

S430: Accessing a memory at the target physical address.

After obtaining the target physical address, memory access is performed. If it is a read operation, the read data is returned to the master device; if it is a write operation, data carried in the memory access request is written into the memory corresponding to the target physical address. This step achieves the access of the master device to the physical memory.

In the technical solution of the embodiment of the present disclosure, through the system memory management unit, the target page table is located based on the target stream identifier, the target physical address is found in the target page table through the target virtual address, and finally the memory corresponding to the target physical address is accessed. This solution achieves flexible translation from a virtual address to a physical address through page table mapping, and simplifies the management of physical addresses by software.

The solutions involved in the present disclosure are not limited to the above-mentioned embodiments.

### Exemplary Apparatus

The memory access control method provided by the embodiments of the present disclosure has been introduced above. It can be understood that, in order to implement the various functions of the memory access control method, a memory access control apparatus may include corresponding hardware and software for implementing the hardware functions.

Those skilled in the art should easily realize that, in combination with the steps of the memory access control method described in the various embodiments of the present disclosure, the various embodiments of the present disclosure can be implemented in the form of hardware, or in a combination form of software driving hardware. Whether a certain function is executed in the form of hardware or software driving hardware depends on the specific application and design constraint conditions of the technical solution. Professionals and technicians can use different methods for each specific application to implement the described functions, but such implementation should not be considered as beyond the scope of the present disclosure.

The beneficial technical effects corresponding to the exemplary embodiments of the device can be referred to the corresponding beneficial technical effects of the above exemplary method part, which will not be repeated here.

FIG. 7 is a schematic structural diagram of a memory access control apparatus according to an exemplary embodiment of the present disclosure.

As shown in FIG. 7, in one embodiment, the memory access control apparatus 700 includes:
a request generation module 701, configured to generate, based on a service requirement, a memory access request of a master device, wherein the memory access request includes a target stream identifier, the target stream identifier being one of at least one stream identifier pre-configured for the master device;
a node determination module 702, configured to determine, based on the service requirement and the target stream identifier, a pre-created target virtual device node receiving the memory access request, wherein a target virtual stream identifier pre-configured on the target virtual device node is the same as the target stream identifier;
a request forwarding module 703, configured to forward the memory access request to a system memory management unit via the target virtual device node; and
a request processing module 704, configured to process the memory access request through the system memory management unit.

In the technical solution of the embodiment of the present disclosure, first, a memory access request of at least one master device is generated based on a service requirement, the memory access request including a target stream identifier selected from pre-configured stream identifiers. Second, based on the service requirement and the target stream identifier, a pre-created target virtual device node is determined, a target virtual stream identifier pre-configured on the target virtual device node is consistent with the target stream identifier, and then the memory access request is forwarded to a system memory management unit via the target virtual device node. The memory access request is processed through the system memory management unit to achieve memory access by the master device. Through this solution, a plurality of master devices can share a page table through the same stream identifier to improve access efficiency, and enables the same master device to associate independent page tables through different stream identifiers in different operating systems or service phases to achieve security isolation.

In an exemplary embodiment, the node determination module 702 is specifically configured to:
determine, based on the service requirement, at least one virtual device node under the service requirement and at least one virtual stream identifier pre-configured on the at least one virtual device node, the at least one virtual device node being pre-created;
determine, from the at least one virtual stream identifier, the target virtual stream identifier that is the same as the target stream identifier; and
determine, based on the target virtual stream identifier, a target virtual device node receiving the memory access request.

In an exemplary embodiment, the request generation module 701 is specifically configured to:
respectively generate a plurality of memory access requests of a plurality of master devices when the service requirement indicates the plurality of master devices accessing a memory managed by a first operating system, wherein target stream identifiers in the plurality of memory access requests are the same.

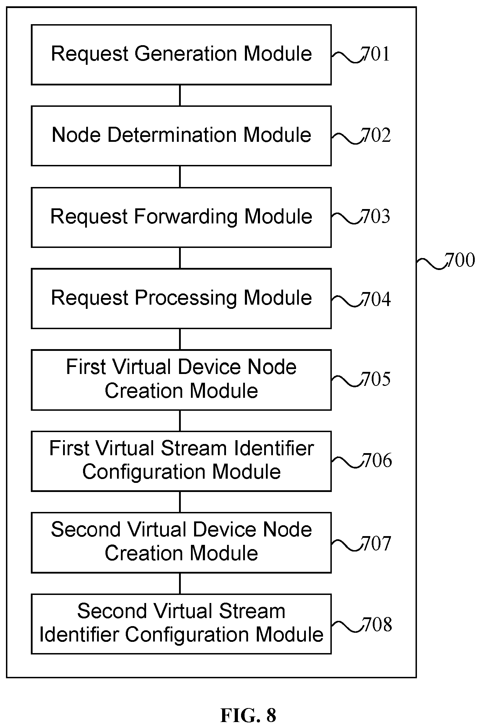

In an exemplary embodiment, as shown in FIG. 8, the memory access control apparatus 700 further includes:
a first virtual device node creation module 705, configured to create a virtual device node through the first operating system; and
a first virtual stream identifier configuration module 706, configured to configure, for the virtual device node, a virtual stream identifier that is the same as the target stream identifier.

In an exemplary embodiment, the request generation module 701 is specifically configured to:
respectively generate a plurality of memory access requests of a master device corresponding to a plurality of second operating systems when the service requirement indicates the master device accessing memories managed by the plurality of second operating systems, wherein target stream identifiers in the plurality of memory access requests are different from each other.

In an exemplary embodiment, the request generation module 701 is specifically configured to:
switch, based on the service requirement at different times, a target stream identifier of the master device to a target stream identifier corresponding to a second operating system currently to be accessed when the service requirement indicates the master device accessing memories managed by the plurality of second operating systems; and
generate, whenever generating the memory access request, the memory access request based on the target stream identifier of the master device at a current time.

In an exemplary embodiment, as shown in FIG. 8, the memory access control apparatus 700 further includes:
a second virtual device node creation module 707, configured to respectively create, on a third operating system, virtual device nodes respectively corresponding to the plurality of second operating systems when the master device belongs to the third operating system and an access type of memory access of the service requirement indicates writing data to a memory; and
a second virtual stream identifier configuration module 708, configured to configure, for each virtual device node, a virtual stream identifier, the virtual stream identifier being the same as a target stream identifier used when the master device accesses a second operating system corresponding to the virtual device node.

In an exemplary embodiment, the memory access request further includes a target virtual address; the request processing module 704 is specifically configured to:
determine, through the system memory management unit, a target page table corresponding to the target stream identifier;
determine, according to a mapping relationship between virtual addresses and physical addresses in the target page table, a target physical address corresponding to the target virtual address; and
access a memory at the target physical address.

### Exemplary Electronic Device

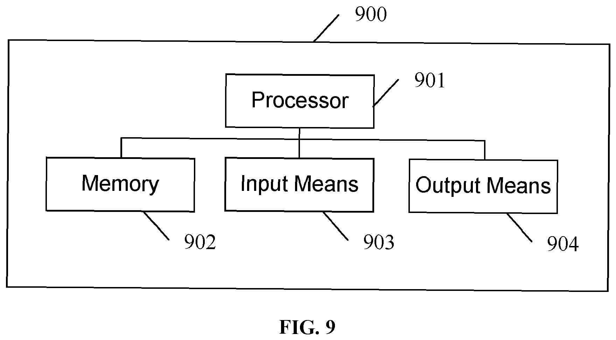

FIG. 9 is a structural diagram of an electronic device according to an exemplary embodiment of the present disclosure, including at least one processor 901 and a memory 902.

The processor 901 may be a Central Processing Unit (CPU) or other forms of processing units having data processing capability and/or instruction execution capability, and may control other components in the electronic device 900 to perform desired functions.

The memory 902 may include one or more computer program products, and the computer program products may include various forms of computer-readable storage media, such as a volatile memory and/or a non-volatile memory. The volatile memory, for example, may include a Random Access Memory (RAM) and/or a cache memory (cache), etc. The non-volatile memory may include, for example, Read-Only Memory (ROM), a hard disk, a flash memory, etc. The non-volatile memory, for example, may include a Read-Only Memory (ROM), a hard disk, a flash memory, etc. One or more computer program instructions may be stored on the computer-readable storage medium, and the processor 901 may run the one or more computer program instructions to implement the memory access control method of the various embodiments of the present disclosure described above and/or other desired functions.

In one example, the electronic device 900 may further include: an input means 903 and an output means 904, and these components are interconnected through a bus system and/or other forms of connection mechanisms (not shown).

The input means 903 may also include, for example, a keyboard, a mouse, and the like.

The output means 904 may output various information to the outside, and may include, for example, a display, a loudspeaker, a printer, and a communication network and remote output means connected thereto, etc.

Of course, for simplicity, only some of the components in the electronic device 900 related to the present disclosure are shown in FIG. 9, and components such as a bus, an input/output interface, etc. are omitted. In addition, according to specific application conditions, the electronic device 900 may also include any other appropriate components.

### Exemplary Computer Program Product and Computer Readable Storage Medium

In addition to the above method and device, the embodiments of the present disclosure may further provide a computer program product including computer program instructions, which, when executed by a processor, cause the processor to execute the steps of the memory access control method of the various embodiments of the present disclosure described in the "Exemplary Method" section above.

The computer program product may write program codes for performing the operations of the embodiments of the present disclosure in any combination of one or more programming languages, including object-oriented programming languages such as Java, C++, etc., as well as conventional procedural programming languages such as the "C" language or similar programming languages. The program codes may be executed entirely on the user's computing device, partly on the user's device, as a stand-alone software package, partly on the user's computing device and partly on a remote computing device, or entirely on the remote computing device or server.

In addition, the embodiments of the present disclosure may further be a computer-readable storage medium having computer program instructions stored thereon, the computer program instructions, when executed by a processor, causing the processor to execute the steps of the memory access control method of the various embodiments of the present disclosure described in the "Exemplary Method" section above.

The computer readable storage medium may adopt any combination of one or more readable media. The readable medium may be a readable signal medium or a readable storage medium. The readable storage medium includes, for example, but is not limited to, an electrical, magnetic, optical, electromagnetic, infrared, or semiconductor system, apparatus or device, or any combination of the above. More specific examples (non-exhaustive list) of the readable storage medium include: an electrical connection with one or more wires, a portable disk, a hard disk, a Random Access Memory (RAM), a Read-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the above.

The basic principles of the present disclosure have been described above in conjunction with specific embodiments. However, the advantages, benefits, effects, etc. mentioned in the present disclosure are merely examples and not limitations, and cannot be considered as essential for each embodiment of the present disclosure. In addition, the specific details disclosed above are only for exemplary purposes and facilitating understanding, rather than limitations. The above details do not limit the present disclosure to be implemented by using the above specific details.

Those skilled in the art can make various modifications and changes to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. A memory access control method, comprising:
generating (S100), based on a service requirement, a memory access request of a master device, wherein the memory access request comprises a target stream identifier, the target stream identifier being one of at least one stream identifier pre-configured for the master device;
determining (S200), based on the service requirement and the target stream identifier, a pre-created target virtual device node receiving the memory access request, wherein a target virtual stream identifier pre-configured on the target virtual device node is the same as the target stream identifier;
forwarding (S300) the memory access request to a system memory management unit via the target virtual device node; and
processing (S400) the memory access request through the system memory management unit.

2. The memory access control method according to claim 1, wherein the determining (S200), based on the service requirement and the target stream identifier, a pre-created target virtual device node receiving the memory access request comprises:
determining (S210), based on the service requirement, at least one virtual device node under the service requirement and at least one virtual stream identifier pre-configured on the at least one virtual device node, the at least one virtual device node being pre-created;
determining (S220), from the at least one virtual stream identifier, the target virtual stream identifier that is the same as the target stream identifier; and
determining (S230), based on the target virtual stream identifier, the target virtual device node receiving the memory access request.

3. The memory access control method according to claim 1, wherein the generating (S100), based on a service requirement, a memory access request of a master device comprises:
respectively generating (S110) a plurality of memory access requests of a plurality of master devices when the service requirement indicates the plurality of master devices accessing a memory managed by a first operating system, wherein target stream identifiers in the plurality of memory access requests are the same.

4. The memory access control method according to claim 3, further comprising, before the respectively generating (S110) a plurality of memory access requests of a plurality of master devices when the service requirement indicates the plurality of master devices accessing a memory managed by a first operating system:
creating a virtual device node through the first operating system; and
configuring, for the virtual device node, a virtual stream identifier that is the same as the target stream identifier.

5. The memory access control method according to claim 1, wherein the generating (S100), based on a service requirement, a memory access request of a master device comprises:
respectively generating (S120) a plurality of memory access requests of a master device corresponding to a plurality of second operating systems when the service requirement indicates the master device accessing memories managed by the plurality of second operating systems, wherein target stream identifiers in the plurality of memory access requests are different from each other.

6. The memory access control method according to claim 5, wherein the respectively generating (S120) a plurality of memory access requests of a master device corresponding to a plurality of second operating systems when the service requirement indicates the master device accessing memories managed by the plurality of second operating systems comprises:
switching, based on the service requirement at different times, a target stream identifier of the master device to a target stream identifier corresponding to a second operating system currently to be accessed when the service requirement indicates the master device accessing memories managed by the plurality of second operating systems; and
generating, whenever generating the memory access request, the memory access request based on the target stream identifier of the master device at a current time.

7. The memory access control method according to claim 5, further comprising, before the respectively generating (S120) a plurality of memory access requests of a master device corresponding to a plurality of second operating systems when the service requirement indicates the master device accessing memories managed by the plurality of second operating systems:
respectively creating, on a third operating system, virtual device nodes respectively corresponding to the plurality of second operating systems when the master device belongs to the third operating system and an access type of memory access of the service requirement indicates writing data to a memory; and
configuring, for each virtual device node, a virtual stream identifier, the virtual stream identifier being the same as a target stream identifier used when the master device accesses a second operating system corresponding to the virtual device node.

8. The memory access control method according to claim 1, wherein the memory access request further comprises a target virtual address;
the processing (S400) the memory access request through the system memory management unit comprises:
determining (S410), through the system memory management unit, a target page table corresponding to the target stream identifier;
determining (S420), according to a mapping relationship between virtual addresses and physical addresses in the target page table, a target physical address corresponding to the target virtual address; and
accessing (S430) a memory at the target physical address.

9. A memory access control apparatus (700), comprising:
a request generation module (701), configured to generate, based on a service requirement, a memory access request of a master device, wherein the memory access request comprises a target stream identifier, the target stream identifier being one of at least one stream identifier pre-configured for the master device;
a node determination module (702), configured to determine, based on the service requirement and the target stream identifier, a pre-created target virtual device node receiving the memory access request, wherein a target virtual stream identifier pre-configured on the target virtual device node is the same as the target stream identifier;
a request forwarding module (703), configured to forward the memory access request to a system memory management unit via the target virtual device node; and
a request processing module (704), configured to process the memory access request through the system memory management unit.

10. The memory access control apparatus (700) according to claim 9, wherein the node determination module (702) determines, based on the service requirement and the target stream identifier, a pre-created target virtual device node receiving the memory access request through:
determining, based on the service requirement, at least one virtual device node under the service requirement and at least one virtual stream identifier pre-configured on the at least one virtual device node, the at least one virtual device node being pre-created;
determining, from the at least one virtual stream identifier, the target virtual stream identifier that is the same as the target stream identifier; and
determining, based on the target virtual stream identifier, the target virtual device node receiving the memory access request.

11. The memory access control apparatus (700) according to claim 9, wherein the request generation module (701) generates, based on a service requirement, a memory access request of a master device through:
respectively generating a plurality of memory access requests of a plurality of master devices when the service requirement indicates the plurality of master devices accessing a memory managed by a first operating system, wherein target stream identifiers in the plurality of memory access requests are the same.

12. The memory access control apparatus (700) according to claim 11, further comprising:
a first virtual device node creation module (705), configured to create a virtual device node through the first operating system; and
a first virtual stream identifier configuration module (706), configured to configure, for the virtual device node, a virtual stream identifier that is the same as the target stream identifier.

13. A chip system (1000), comprising:
a master device (1100) configured with at least one stream identifier, and configured to generate a memory access request based on a service requirement and to send the memory access request to a target virtual device node based on the service requirement and a target stream identifier, wherein the memory access request comprises the target stream identifier, the target stream identifier being one of the at least one stream identifier pre-configured for the master device (1100), and wherein a target virtual stream identifier pre-configured on the target virtual device node is the same as the target stream identifier;
a virtual device node (1200) configured with a virtual stream identifier and configured to receive the memory access request and forward the memory access request to a system memory management unit (1300); and
the system memory management unit (1300), configured to process the received memory access request.

14. An electronic device (900), comprising:
one or more processors (901); and
a memory (902), on which computer instructions are stored, the computer instructions, when executed by the one or more processors (901), cause the one or more processors (901) to implement the method according to any one of claims 1 to 8.

15. A computer-readable storage medium, on which computer program instructions are stored, wherein the computer program instructions, when executed by a processor, cause the processor to implement the method according to any one of claims 1 to 8.
